Europäisches Patentamt

European Patent Office

Office européen des brevets

(11) Publication number: **0 132 603**
**B1**

(12) **EUROPEAN PATENT SPECIFICATION**

(45) Date of publication of patent specification: **12.11.86**

(51) Int. Cl.⁴: **F 16 L 37/24, F 16 L 37/10**

(21) Application number: **84107312.5**

(22) Date of filing: **26.06.84**

(54) **Flexible hose.**

(30) Priority: **27.06.83 IT 6092783 u**

(43) Date of publication of application:
**13.02.85 Bulletin 85/07**

(45) Publication of the grant of the patent:
**12.11.86 Bulletin 86/46**

(84) Designated Contracting States:
**AT BE CH DE FR GB LI LU NL SE**

(56) References cited:
**FR-A-1 037 844**
**US-A-1 838 313**
**US-A-2 042 125**
**US-A-3 695 648**

(73) Proprietor: **MERLETT TECNOPLASTIC s.p.a.**
**Via XXV Aprile**
**I-21020 Daverio (VA) (IT)**

(72) Inventor: **Tamborini, Ariberto**
**Via Goldoni, 26**
**I-21100 Varese (VA) (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention refers to a flexible hose and more exactly to a flexible hose which can be easily connected with another hose or with a pump for its suction or delivery or with another part, as e.g. a foot valve.

In order to accomplish said connections, union fittings are normally used. These consist of two elements, a female one and a male one, respectively associated with the two parts to be connected.

The female part genernally includes a ring nut and a tubular element, the latter being furnished on the outer surface towards one end with an annular enlargement, while the other end is connected to one of the two parts to be fitted together and in the case of a flexible hose it is threaded inside one end of it and is fastened to it by hose clamps, and the ring nut having the inside diameter bigger than the diameter of the tubular element but not of its annular enlargement, having therefore to be threaded on the tubular element before introducing its end into the flexible hose end, and being equipped with stopping ring against the circular crown which delimits said enlargement towards the hose and which also prevents the ring nut from coming out of the female fitting, and with a threading suited to screw it with the threaded end of the tubular element of the male part of the fitting which is joint at its other end to the part to be assembled. The terminal parts facing one another in the fitting of the two tubular elements, that is the flat surfaces of the circular crowns corresponding to their thickness which delimit axially such elements, are the sealing surfaces of the fitting and a gasket is usually interposed between them in order to improve the seal, the tightening being accomplished through the screwing of the ring nut which pushes the two surfaces one against the other.

Normally a flexible hose is equipped at one of its ends with the female part of a union fitting and at the other end with the male part of another union fitting.

There are also quick connection union fittings wherein the ring nut and the tubular element of the male part are equipped, instead of a connection threading, with other devices suited to allow their quick connection, as in the bayonet type. There are also more complex types of these quick connection fittings, which are provided with double ring nuts, as they have in fact two ring nuts which can be reciprocally screwed, the outer one of which, hereinafter called locking nut, is equipped with the connection devices, and the inner one, hereinafter called regulating ring nut, is provided with the stopping ring on the annular enlargement of the tubular element of the female part, so that by additionally screwing the inner ring nut with the outer one after the last said has been connected to the corresponding ring nut of the other part to be assembled, the connection strength of the sealing surfaces can be increased and so regulated.

A flexible hose having the features of the precharacterising part of claim 1 as disclosed in FR—A—1 037 844.

The drawback of the flexible hoses which can be connected with union fittngs of any type essentially consists in the higher cost of the hose which must be used, compared with the cost of the hose which it would be sufficient to use for the contemplated requirements of use, should there be no inside throttling of the tubular element of the fitting.

The aim of the invention is to eliminate this drawback.

The flexible hose which can be connected with the other parts in conformity with the present invention includes a fitting ring nut which is passed onto the hose itself, equipped with stopping surface, and the hose ends are rigid and shaped: the one end which may be connected with said ring nut having an outside cylindrical portion whose circular surface remote from the hose end forms the counter stopping surface of such ring nut, and the other end having an outside thread and possibly an annular enlargement to limit the advancing of the ring nut of the female fitting of the part to be connected with such flexible hose end, the inside diameter of the hose being constant throughout including in said rigid hose ends.

In an improvement the ring nut is double, that is it includes a regulating ring and one or more, each other interchangeable, locking nuts, such locking nuts being unthreadable from the hose, moreover each one of such locking nuts being equipped with connecting devices different one from the other in order to connect the corresponding hose end with parts having fittings of different type.

In a further improvement the outside surface of the hose end part has sections having a diameter different one from the other and the hose includes a cylindrical gasket having inside diameters suitable to be fitted through elastic deformation onto the end part, the diameters of the end part and the gasket after the assemblage being such that the last said stays firmly attached to the enlargement making therefore the handling of the hose easier when assembling it to other parts avoiding said gasket to fall or sit in a wrong way.

It is evident from the description which has been made that the flexible hose in conformity with the invention is particularly suited to be also entirely accomplished with plastics even if of several types, by using techniques well known to the prior art, hence with low production costs, thus improving the saving achieved through the use of hoses having a diameter smaller than the diameter required up to now for the same requirements of use.

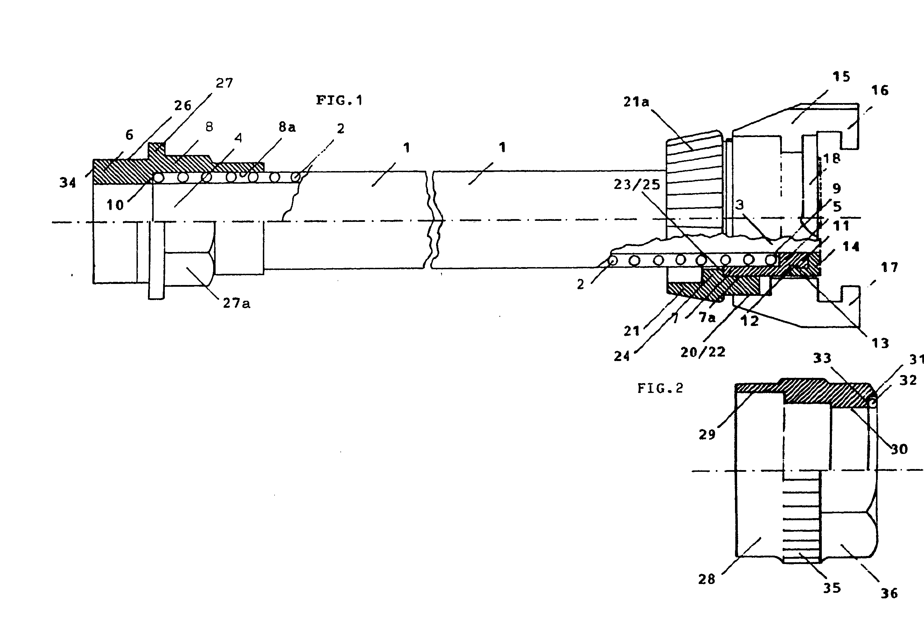

One way of carrying out the invention is described in detail below with reference to drawings which illustrate only one specific embodiment, in which figures 1 and 2 are partially cross-section side views.

The flexible hose 1 is a plastic hose having in its thickness a stiffening spiral, also made of plastic material. The terminal rigid parts 3 and 4 of the hose have two inside diameters, of which the inside diameter of the sections 5 and 6 of the rigid parts is equal to the inside diameter of hose 1; while the inside diameter of the sections 7 and 8 of the rigid parts is equal to the outside diameter of the remaining hose, which said parts have been permanently connected with the hose during manufacturing along the cylindrical surfaces 7a and 8a and the flat surfaces 9 and 10.

The free end 11 of part 5 has an outside surface having a diameter which is smaller than the diameter of the remaining part and is equipped with a circular groove 12 hzving square section suited to receive the flange of the elastic cylindrical gasket 14 in order to fasten the latter after assembly through elastic deformation onto the end 11. The locking ring nut 15 is of the bayonet connection type and is therefore equipped with the two enlargements for outside attachment 16 and 17 and with two peripherical enlargements, the figure showing only the enlargement 18, intended to fasten themselves through penetration and rotation to the corresponding parts of the ring nut of the part to which said end of the flexible hose 1 must be connected. The inside dimensions of the ring nut 15 are such as to allow its passage onto and off from hose 1. In the part towards the last said ring nut 15 is equipped with threading 20 suited to allow it to be screwed with the regulating ring nut 21 in correspondence to the threaded part 22 of it. Said ring nut 21 is equipped with the stopping surface 23 of the annular enlargement 24, the counter stopping surface consisting of the surface 25 delimiting the part 3. Said ring nut 21, having free rotation and translation with respect to the flexible hose but not unthreadable out of it, is equipped, in addition, with knurling 21a on the outside surface, so that it can more easily be screwed even by hand, in order to finally lock the fitting after assembly of the ring nut 15 with the homologous element of the part, whereto this hose end must be connected. The terminal rigid part 4 of the other end of the hose 1 is equipped outside with an annular enlargement 27 and with hexagonal facets 27a for the screwing of said end equipped with threading 26 with possible aid of keys to the ring nut of the part which it must be connected to. The flexible hose of the example is also equipped with a second locking nut 28 for connection with parts equipped with screw fittings equal to the part 4 of the hose 1. Said ring nut 28 can also replace the ring nut 15 as it is equipped with inside threading 29 equal to the one 20 of the ring nut 15 and therefore suited to screw itself to the threaded part 22 of the regulating ring nut 21 in order to be connected to the last said, and is equipped in addition with the inside threading 30 in the terminal part to allow its connection by screwing with a part equipped with terminal threaded tubular element as the 26 of the part 4, and in addition with the circular groove 31 suited to receive the elastic gasket 32 having circular section to form a second seal area of the connection between the circular surface 33 of the head of the ring nut 28 the part 4. Said ring nut is provided outside with knurling 35 as well as with hexagonal facets 36 for its screwing for its screwing by hand or by means of a key.

Of course the dimensions of the parts intended to be connected and the types of threading correspond to the standard requirements, the diameter and length of the hose being selected according to the requirements of the use which is contemplated.

**Claims**

1. Flexible hose which can be connected with other parts including a fitting ring nut (21) passed onto the hose itself, said fitting ring nut (21) being equipped with a stopping surface (23), characterized in that the hose ends are comprised by integral end parts (3, 4) which are rigid and shaped; the one end part (3) which may abut with said ring nut (21) having a cylindrical portion (7) around the outside of the hose itself, whose circular surface (25) remote from the hose free end forms the counter stopping shoulder for surface 23 of ring nut (21), and the other part (4) having an outside thread (26) and possibly an annular enlargement (27) to limit the advancing of the nut of the female fitting of the part to be connected with such flexible hose end, the inside diameter of the hose being constant throughout including in said rigid hose end parts.

2. Hose as claimed in claim 1 characterized in that the ring nut is double, that is it includes a regulating ring nut (21) and one or more locking ring nuts (15, 28) interchangeable with each other, and such locking nuts (15) being unthreadable from the hose (1), moreover each one of such locking nuts (15) being equipped with attachment devices (16, 17, 18, or 30) different one from the other in order to allow connecting of the corresponding flexible hose end with parts having different fittings.

3. Hose as claimed in claims 1 and 2 characterized in that the outside surface of the hose end part (3) connectable with the ring nut has sections having diameters different one from the other, and in that the hose (1) includes a cylindrical gasket (14) having inside diameters suitable to be fitted through elastic deformation onto the terminal part (11) of the end part (3), the diameters of the terminal part (11) and the gasket (14) after the assembly being such that the said gasket (14) stays firmly attached to the enlargement (11) making therefore the handling of the hose (1) easier when assembling it to other parts avoiding said gasket (14) to fall or sit in a wrong way.

**Patentansprüche**

1. Flexibler Schlauch, der mit anderen Teilen verbunden werden kann, mit einer Paß-Ring-Überwurfmutter (21), die auf den Schlauch aufgepreßt ist, wobei die Paß-Ring-Überwurfmutter (21) mit einer Anschlagfläche (23) versehen ist, dadurch gekennzeichnet, daß die Schlauchenden einstückige Endteile (3, 4) aufweisen, die starr und wie folgt geformt sind: Der eine Endteil (3), der an der Ring-Überwurfmutter (21) anliegen kann, hat einen zylindrischen Teil (7), um die Außenseite des Schlauches selbst herum, dessen ringförmige, vom freien Schlauchende abgewandte Fläche (25) eine Gegenanschlagschulter für die fläche (23) der Ring-Überwurfmutter (21) bildet, und der andere Endteile (4) hat ein Außengewinde (26) und ggf. eine ringförmige Verbreiterung (27) zum Begrenzen des Vorschubs der Überwurfmutter der weiblichen Verbindung des Teiles, der mit dem flexiblen Schlauchende verbunden werden soll, wobei der Innendurchmesser des Schlauches durchgehend konstant ist einschließlich der starren Schlauchendteile.

2. Schlauch nach Anspruch 1, dadurch gekennzeichnet, daß die Ring-Überwurfmutter doppelt ist, d.h., daß sie eine Regulier-Überwurfmutter (21) aufweist und eine oder mehrere gegeneinander auswechselbare Sperr-Ring-Überwurfmuttern (15, 28), daß die Sperr-Überwurfmuttern (15) nicht vom Schlauch (1) abgeschraubt werden können und daß ferner die Sperr-Überwurfmuttern (15) versehen sind mit Befestigungsvorrichtungen (16, 17, 18 oder 30), die sich voneinander unterscheiden, um eine Verbindung des zugehörigen flexiblen Schlauchendes mit Teilen mit unterschiedlichen Passungen zu ermöglichen.

3. Schlauch nach Anspruch 1 oder 2, dadurch gekennzeichnet, daß die Außenfläche des Schlauchendteils (3), welches mit der Ring-Überwurfmutter verbunden werden kann, Abschnitte aufweist, die voneinander unterschiedliche Durchmesser haben, und daß der Schlauch (1) eine zylindrische Dichtung (14) aufweist, die einen Innendurchmesser aufweist, der durch elastische Deformation eine Anpassung auf das Anschlußteil (11) des Endteils (3) erlaubt, wobei die Durchmesser des Anschlußteils (11) und der Dichtung (14) nach dem Zusammenbau so sind, daß die Dichtung (14) fest auf dem Anschlußteil (11) befestigt bleibt, wodurch die Handhabung des Schlauches (1) vereinfacht ist, wenn er mit anderen Teilen verbunden wird, da vermieden wird, daß die Dichtung (14) abfällt oder falsch sitzt.

**Revendications**

1. Tuyau flexible pouvant être relié à d'autres parties, comprenant un écrou annulaire d'adaptation (21) passant sur le tuyau lui-même, cet écrou annulaire d'adaptation (21) étant équipé d'une surface de butée (23), tuyau flexible caractérisé en ce que les extrémités de ce tuyau sont constituées par des parties d'extrémité (3, 4) faisant corps avec celui-ci, ces parties d'extrémité étant rigides et mises en forme: l'une des parties d'éxtrémité (3) pouvant venir buter contre l'écrou annulaire (21) comportant une partie cylindrique (7) entourant l'extérieure du tuyau lui-même dont la surface circulaire (25) la plus éloignée de l'extrémité libre du tuyau, forme l'épaulement de butée antagoniste de la surface (23) de l'écrou annulaire (21), et l'autre partie d'extrémité (4) comportant un pas de vis extérieur (26) et éventuellement un élargissement annulaire (27) destiné à limiter l'avancement de l'écrou de l'adaptation femelle de la partie à relier à cette extrémité de tuyau flexible, le diamètre intérieur du tuyau étant constant sur toute sa longueur, y compris dans les parties d'extrémité de tuyau rigides.

2. Tuyau selon la revendication 1, caractérisé en ce que l'écrou annulaire est double, c'est-à-dire qu'il comporte un écrou annulaire de réglage (21) et un ou plusieurs écrous annulaires de blocage (15, 28) interchangeables entre eux, et en ce que ces écrous de blocage (15) sont indévissables complètement du tuyau (1), chacun de ces écrous de blocage (15) étant en outre équipé de dispositifs de fixation (16, 17, 18 ou 30) différents les uns des autres pour permettre la liaison de l'extrémité de tuyau flexible correspondante à des parties présentant des adaptations différentes.

3. Tuyau selon l'une quelconque des revendications 1 et 2, caractérisé en ce que la surface extérieure de la partie d'extrémité de tuyau (3) destinée à se relier à l'écrou annulaire, comporte des sections de diamètres différents les uns des autres, et en ce que le tuyau (1) comporte une garniture cyclindrique (14) présentant des diamètres intérieurs lui permettant de s'adapter, par déformation élastique, sur la partie terminale (11) de la partie d'extrémité (3), les diamètres de la partie terminale (11) et de la garniture (4) après assemblage, étant tels que la garniture (14) reste solidement fixée à l'élargissement (11) en facilitant ainsi la manipulation du tuyau (1) lorsqu'on le relie à d'autres parties, et en évitant que la garniture (14) tombe ou se place de travers.

FIG.1

FIG.2

0 132 603